(19) Europäisches Patentamt
European Patent Office
Office européen des brevets

(11) **EP 3 810 686 B1**

(12) **EUROPEAN PATENT SPECIFICATION**

(45) Date of publication and mention of the grant of the patent:
**08.05.2024 Bulletin 2024/19**

(21) Application number: **19733002.0**

(22) Date of filing: **21.06.2019**

(51) International Patent Classification (IPC):
*C08K 3/00* (2018.01)     *C08G 65/48* (2006.01)
*C08L 71/00* (2006.01)

(52) Cooperative Patent Classification (CPC):
(C-Sets available)
**C08G 65/48; C08L 71/00**     (Cont.)

(86) International application number:
**PCT/EP2019/066528**

(87) International publication number:
**WO 2019/243604 (26.12.2019 Gazette 2019/52)**

(54) **NANOPARTICLES OF POLYDOPAMINE AND S-PAEK (SULFONATED-POLYARYLETHERKETONE) DERIVATIVES AND WATER-BASED PROCESS FOR PREPARING THEREOF**

NANOPARTIKEL AUS POLYDOPAMIN- UND S-PAEK (SULFONIERTES POLYARYLETHERKETON)-DERIVATEN UND VERFAHREN ZUR HERSTELLUNG DERSELBEN

NANOPARTICULES DE DÉRIVÉS DE POLYDOPAMINE ET DE S-PAEC (POLYARYLÉTHERCÉTONE SULFONÉ) ET PROCÉDÉ À BASE D'EAU POUR LEUR PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2018 EP 18179409**

(43) Date of publication of application:
**28.04.2021 Bulletin 2021/17**

(73) Proprietor: **Luxembourg Institute of Science and Technology (LIST)**
**4362 Esch-sur-Alzette (LU)**

(72) Inventors:
• **MARTIN, Arnaud**
**54860 Hacourt Moulaine (FR)**

• **MERTZ, Grégory**
**57390 Audun-le-Tiche (FR)**

(74) Representative: **Lecomte & Partners**
**76-78, rue de Merl**
**2146 Luxembourg (LU)**

(56) References cited:
WO-A1-2013/103322     CN-A- 103 554 831
CN-A- 103 715 438     CN-A- 104 069 752
CN-A- 105 390 721     CN-A- 105 529 485
CN-A- 106 188 590

EP 3 810 686 B1

(52) Cooperative Patent Classification (CPC): (Cont.)

C-Sets
**C08L 71/00, C08K 3/00**

## Description

The present invention relates to nanoparticles made of polydopamine and S-PAEK (sulfonated-polyaryletherketone) derivatives. The invention also relates to a process of preparing such nanoparticles and of coating a material with said nanoparticles.

The development of new composite materials by the use of innovative and environmentally-friendly methodologies or the use of recyclable constituents is a research area of spectacular success [1-2]. Incidentally, it is assumed that the fiber-matrix interface is the key to reach high-performance in composites [3]. Interestingly, one of the challenges linked to composite's breakthrough relates to the fiber-matrix interface compatibilization, adhesion promotion, aging and improvement of damage tolerance. In this context, the properties of for example carbon fiber reinforced-matrix composites depend on the interphase properties which are directly induced by the structural arrangements of its constituents and the interfacial layer during the composites fabrication [4-5]. Regarding the replacement of thermoset polymer matrix, for instance cyanate ester matrix, for structural and/or space applications, by recyclable thermoplastics, an insufficient number of interfacial layers (including sizing coating) via environmentally-friendly methodologies has been reported so far [6]. For this reason, research works were focused on the development of environmentally-friendly sizing applied via water-based processes for compatibilization and adhesion promotion at the interfacial layer of thermostable and high-performance composite materials [7].

Inspired by mussels and their capability to adhere to any kinds of substrates under wet conditions, the development of "polydopamine" (PDA) coatings emerged as bio-inspired coatings for an efficient adhesion promotion [8]. Despite its several advantages, very well described in the literature [9], PDA and its procedure deposition present some drawbacks link to the thickness of the coatings, the duration of the surface treatment and the intrinsic mechanical properties of the resulted-film.

A significant challenge needs to be addressed to make this compatibilization and adhesion promotion partner a key pillar in the formulation of water-based sizing dedicated to high-perfomance composite applications. The Applicant has demonstrated that a PDA-based coating at the pitch-based carbon fiber surface, used as reinforcement material of a PAEK-composites, especially PEEK (polyetheretherketone) composites, acted as a transcrystallinity and adhesive promoter [7]. As above-mentioned, the main drawback of these surface treatments was the duration of the dipping. The best results were obtained with 24 hours surface treatment duration.

In that sense, the development of a sizing formulation applying via a water-based procedure in a one-step process and containing adhesive promoter such as nanopolydopamine could lead to virtually promoting the fiber-matrix interface quality.

Oxidative effective strategies inducing PDA coating have been extensively studied [10], and very recently, the possibility to obtain a stable suspension of PDA has been highlighted [11]. These stable PDA-materials solutions pave the way to the development of stable suspension in water-based solutions of nanopolydopamine. In this framework and inspired by the layer-by-layer (LBL) assembly via electrostatic interaction, efforts were focused on the control of the polydopamine growth in water-based solutions using polyelectrolytes for composite applications. Indeed, the LBL technique relies upon the deposition of an oppositely charged polyelectrolyte to a previously adsorbed one, hence modifying the surface properties. Relevant reviews have been published recently detailing the LBL technique [12-13]. An important aspect concerns the fact that LBL films cannot only be deposited from polyelectrolytes (due to electrostatic interactions) but also from all kinds of molecules or particles owing to mutually complementary interactions, such as hydrogen donor-acceptors [14], complementary stereoregular polymers [15] and nanomaterials [16] justifying their use with polydopamine (PDA).

CN 105 529 485 A discloses a preparation method of a carbon nanotube-loaded heteropolyacid-sulfonated polyether ether ketone proton exchange membrane. The membrane is prepared by a heteropolyacid-loaded carbon nanotube and sulfonated polyether ether ketone, namely the modified carbon nanotube is soaked into a heteropolyacid water solution to obtain the heteropolyacid-loaded carbon nanotube; and the heteropolyacid-loaded carbon nanotube and the sulfonated polyether ether ketone are doped, so as to prepare the proton-exchange membrane through a tape-casting method.

CN 104 069 752 A1 discloses a sulfonated polyether-ether-ketone-amino acid modified graphene oxide hybrid membrane. The hybrid membrane consists of sulfonated polyether-ether-ketone and amino acid modified graphene oxide. The preparation process comprises the following steps: oxidizing flake graphite to prepare graphene oxide, adding graphene oxide into a hydroxymethyl aminomethane-HCl solution containing dopamine, and carrying out a chelation reaction to obtain dopamine-modified graphene oxide; adding dopamine-modified graphene oxide into a cysteine solution, and carrying out a grafting reaction to obtain amino acid modified graphene oxide; and blending amino acid modified graphene oxide and a sulfonated polyether-ether-ketone solution to obtain a casting film solution, and performing membrane preparation to obtain the hybrid membrane. CN 103 554 831 A1 discloses a sulfonated polyetheretherketone/amino-functionalized TiOz hybrid membrane, as well as a preparation and applications of the hybrid membrane. The hybrid membrane is formed by sulfonated polyetheretherketone and amino-functionalized TiOz. The preparation of the hybrid membrane comprises the following steps: adding TiOz microspheres into a hydroxymethyl aminomethane-HCL solution containing dopamine, for chelation reaction, to obtain dopamine modified TiOz microspheres; adding the dopamine modified TiOz microspheres into a polyethyleneimine solution for grafting reaction to obtain amino-functionalized $TiO_2$; mixing the amino-functionalized TiOz with a sulfonated polyetheretherketone solution to obtain a membrane casting solution and performing membrane making to obtain the hybrid membrane.

CN 106 188 590 A discloses a polymer hybrid proton exchange membrane modified by metal organic framework structures and a preparation method of the membrane. The connected amino functional metal organic framework structures (I-MOF-NH2) are formed by fixing partially-cross-linked MOF-NH2 to the surface of a two-dimensional nanosheet layer material (2D NSs), and then the metal organic framework structures are doped in polymer to obtain the polymer hybrid proton exchange membrane modified by the connected amino functional metal organic framework structures.

CN 105 390 721 discloses a method for preparing a boron phosphate coated carbon nanotube composite proton exchange membrane. According to the method, sulfonated polyether ether ketone is used as the base material, and boron phosphate coated carbon nanotubes are used as the dopant, so that the membrane is prepared.

CN 103 715 438 A discloses a nano-composite proton exchange membrane for the proton exchange membrane fuel cell under a high-temperature anhydrous condition as well as a preparation method and an application thereof. The nano-composite proton exchange membrane is a graphene oxide nano-composite proton exchange membrane which is modified by sulfonated poly(ether ether ketone) and polydopamine.

WO 2013/103322 A1 discloses methods of preparing monodispersed polydopamine nano- or microspheres. The methods comprise providing a solvent system comprising water and at least one alcohol having the formula R-OH, adding dopamine to said solvent system to form a reaction mixture; and agitating said reaction mixture for a time period of 1 to 10 days to form said monodispersed polydopamine nano- or microspheres.

The invention is as set out in appended set of claims.

One aim of the invention is the preparation of water-based solutions, containing nanomaterials adhesive promoter dedicated to surface treatment applications, for instance the preparation of a coated material, using environmentally-friendly and bio-inspired catecholamine molecules. Taking advantage of nature and the refined and hierarchical organization of constituents arise from electrostatic interactions, polyelectrolytes were used to control the growth of polydopamine nanoparticles self-assembly. The use of polydopamine nanoparticles paves the way for the compatibilization and adhesion promotion at the interface of dissimilar materials (bio-based, bio-compatible and/or high-performance) using their ability to attach to all kinds of materials under wet conditions.

One of the goals is to develop a formulation processable in a one-step sizing process which avoids a long time for coating materials and aggregation of the polydopamine stabilized particles, and containing a polyelectrolyte, an adhesive promoter and/or a compatibilising promoter (PDA and/or PAEK derivatives).

The invention relates to a process for preparing nanoparticles of polydopamine and of a polyelectrolyte, comprising the following steps of:

a) providing an alkaline aqueous solution comprising a polyelectrolyte of the sulfonated-polyaryletherketone derivatives type (S-PAEK); and
b) adding dopamine in said alkaline aqueous solution of the polyelectrolyte with an oxidant to control the oxidative-induced polymerization or self-assembly of said dopamine in a nanometer scale.

Several polyelectrolytes were studied, and sulfonated-polyaryletherketone derivatives (S-PAEK), especially sulfonated-poly(etheretherketone) (S-PEEK), were synthesized and used to control the nanomaterials size to tune surface coatings development for high-performance applications. It was shown that polyelectrolyte species, whatever its ionic charge, can be used to manage the growth of the nanopolydopamine via polymerization or self-assembly efficiently. It was proved that these nanoparticles, or nanomaterials, could be used for the development of high-performance water-based sizing for the surface treatment, for example, of carbon-based materials.

The nanoparticles of PDA/S-PAEK derivatives partners may have several structural shapes in the context of the invention. The nanoparticles may have a core-shell type shape with the polydopamine in the core or may be a complex of PDA/S-PAEK derivatives, or even meaning that PDA is stabilized by S-PAEK derivatives. The stabilization of PDA by S-PAEK derivatives is highly favored, avoiding the aggregation of polydopamine particles during the particle growth resulting in undesirable particles of several micrometer sizes.

Main unexpected advantages of the process is the use of a polyelectrolyte which is water soluble, the obtention of nanoparticles of PDA/S-PAEK derivatives which are stable in an neutral aqueous solution, preferably alkaline aqueous solution, for at least more than three days and that may be usable for coating a material very quickly, for example, a coating could be made in about 10 s. This aqueous solution is a stable colloidal suspension. The process is environmentally-friendly as dopamine is used as precursor of PDA and water as the media treatment.

The polyelectrolyte of S-PAEK derivatives type could be considered as a complexing or a functionalisation or as stabilising agent of PDA, which also may advantageously promote the compatibility of PDA with high-performance materials, such as PAEK or polyetherimide (PEI) polymers, owing to the S-PAEK polyelectrolyte,

5      **EP 3 810 686 B1**      6

PDA could then be the adhesive promoter and/or a compatibilising promoter for example of carbon-based fibers.

The specific use of S-PAEK derivatives make these nanoparticles compatible with various matrix, for example PEEK thermoplastics or PEI matrices used in various technical fields, such as structural parts in the aeronautical or automotive fields.

These nanoparticles of PDA/S-PAEK derivatives may also be incorporated in a polymer matrix, as a reinforcement agent or a filler and may advantageously act as a compatibilising agent in order to promote adhesion or interdiffusion of dissimilar incompatible matrices.

Then applicant has shown that the specific use of sulfonated-polyaryletherketone derivatives (S-PAEK) polyelectrolyte instead of non-sulfonated PAEK derivatives, i.e including compounds of PAEK polymer types, overcome the major drawbacks of (i) the insolubility of PAEK polymers in water, (ii) the need to process PAEK polymers at temperatures as high as about 400°C to erase the thermal history of the PAEK polymer, such temperatures being incompatible with the standard sizings, (iii) the low compatibility between the material surface and the polymer coating with PAEK polymers.

The S-PAEK derivatives may be obtained via an electrophilic aromatic sulfonation of the PAEK native polymer, according to the protocol used by Huang *et al* [17], to modify the PAEK native polymer without degradation or cross-link. PAEK polymers are a family of semicrystalline thermoplastics with high-temperature stability and high mechanical strength which molecular backbone contains alternately ketone (R-CO-R) and ether groups (R-O-R). The linking group R between the functional groups consists of a 1,4-substituted aryl group.

S-PAEK derivatives do mean the S-PAEK family of polymers, which could optionally be substituted by various chemical groups, without been limited, such as OH, SH, alkyl, akylene, aromatics.

The S-PAEK derivatives family of step a) advantageously includes at least one compound among the S-PEK (sulfonated-polyetherketone), S-PEEK (sulfonated-polyetheretherketone), S-PEEKK (sulfonated-poly-etheretherketoneketone), S-PEKK (sulfonated-poly-etherketoneketone) and S-PEKEKK (sulfonated-polyetherketoneetherketoneketone) compounds, S-PEEK being the preferred.

The sulfonation degree of the PAEK polymers is one the parameters that should be advantageously controlled. It could be considered that an efficient sulfonation reaction is leading to a sulfonation degree (SD) of S-PAEK derivatives comprised between about 0.95 and 1, the value 1 being the complete sulfonation of the starting PAEK native polymer. These SD values allow the solubility of the S-PAEK derivatives in water, preferably in hot water, temperatures of which are typically of from 60°C to 90°C.

Visual observation of the S-PAEK derivatives at different sulfonation times were performed, and the more the SD is high the more the S-PAEK derivatives appear like crosslinked materials exhibiting brown color. Depending of the SD, the color varies from white-beige and opaque (low SD) to brown and transparent (high SD).

The aqueous alkaline solution of steps a)-b) is a pure water alkaline solution or a buffer alkaline solution of tris(hydroxymethyl)aminomethane (THAM)/HCl or TRIS, concentration of which is preferably of from 50 mM to 500 mM.

Advantageously, the pH of the aqueous alkaline solution is in the range of 7.5 to 10. The range of said pH values provides efficient polymerization of the dopamine (step b)).

The concentration of the S-PAEK derivatives polyelectrolyte is advantageously from 0.2 mg/mL to 10 mg/mL, preferably from 0.5 mg/mL to 10 mg/mL, more preferably from 1 mg/ml, most preferably from 2 mg/mL to 10 mg/mL. This concentration range is the best suited to perform the polymerization of dopamine, the latter preferably being at an appropriate predetermined concentration range, and to obtain nanoparticles of polydopamine with S-PAEK derivatives as low as about 5-about 10 nm, with an increased stability in an aqueous solution, due to the formation of a colloidal stable suspension, which is one of the purpose of the invention.

The step b) relates to the synthesis of polydopamine in the polyelectrolyte solution as defined in step a).

The dopamine compound is dissolved in the alkaline aqueous solution of the S-PAEK derivatives polyelectrolyte, advantageously to obtain a concentration of from 0.2 mg/mL to 50 mg/mL, preferably of from 0.2 mg/mL to 20 mg/mL, more preferably of from 0.2 mg/mL to 10 mg/mL This concentration range of dopamine allows to obtain nanoparticles of PDA/S-PAEK derivatives within the range of about 5 nm-10 nm with an increased stability in an aqueous solution. If the dopamine concentration exceeds the maximum concentration value of 50 mg/mL, undesirable aggregation of PDA particles is occurring even in the presence of S-PAEK derivatives.

Best results regarding the effect of the invention are obtained when the concentration ratio of S-PAEK derivatives/Dopamine during the process is within the range of 0.25 to 5, advantageously from 0.5 to 5, even better from 1 to 5. The nanoparticles of PDA/S-PAEK in an aqueous medium have an increased stability of more than three days, and are compatible with various high-performances matrices, such as PAEK and PEI.

The polymerization conditions require the use of an oxidant, which is preferably air or oxygen, or any chemical that allows the oxidation-induced polymerization to be performed, for example copper sulfate.

Once the dopamine compound in contacted with the polyelectrolyte, the oxidation-induced polymerization of dopamine starts, defining t=0.

Since the control of the growth of PDA particles is imperative for the development of sizing formulations dedicated to high-performances applications, it has been investigated to determine the hydrodynamic size of the

5

PDA nanoparticles (hydrodynamic diameter based on the diffusion of the particles in ultra-pure water by Dynamic Light Scattering - DLS) in the presence of polyelectrolytes as a function of the polyelectrolytes, concentration thereof and the oxidation-induced polymerization duration. A comparative example was done using poly(ethyleneimine) (PEtl) as the polyelectrolyte with preferably identical reaction conditions.

Preferably, the oxidation-induced polymerization duration is of from about 5 min to 24 h. Without being bound by any theory, and the auto-assembly of PDA still being subject to debate, it could be assumed that the minimum duration of about 5 min allows the preparation of a minimum quantity of nanoparticles that could further be recovered by any known means. The polymerization reaction is considered achieved in about 24 h. Duration times are more preferably of from about 5 min to 120 min, more preferably from about 5 min to 40 min, especially from about 5 min to 20 min, particularly from about 5 min to 10 min. In some other embodiments, polymerization duration times may advantageously be comprised between 1.5 and 2.5 h.

The PDA particles growth, using S-PAEK derivatives, occurs several minutes after the contact of dopamine with S-PAEK derivatives (t=0), typically of about 5 minutes, and the nanoparticle plateau values of about 5 nm-10 nm may be reached for an oxidative-induced polymerization duration within the range of about 5 min to about 40 min. With the use of PEtl as polyelectrolyte, the particle size of PDA is in the range of from about 6 nm to about 90 nm, within the oxidative-induced polymerization duration typically of from about 5 min to 120 min, having essentially not any significant influence on the particles growth. Such nanoparticles of PEtl-PDA are less stable in aqueous solutions and are less compatible with high-performance materials.

The process of the invention may be carried out in a lab scale but also on an industrial scale.

The alkaline aqueous solution nanoparticles of PDA/S-PAEK may further be dried off for the removal of the liquid reaction medium, according to known processes.

Another aspect of the invention is nanoparticles of polydopamine and of S-PAEK derivatives. Advantageously, particle sizes of said nanoparticles are of from about 5 nm to about 10 nm.

These nanoparticles may be obtainable by the process described above. Preferably, said nanoparticles are present in an alkaline aqueous solution, the pH being preferably of from 7.5 to 10. In an embodiment, the alkaline aqueous solution may be the reaction medium in the process for preparing nanoparticles of polydopamine and of a polyelectrolyte of the invention. Alternatively, the nanoparticles may be dried off, and dissolved in an aqueous medium, the aqueous medium being at a neutral pH or pure water, or optionally a buffer classically used in the field of the invention. It is advantageously preferred that the nanoparticles are in an aqueous solution.

Nanoparticles are made of polydopamine and S-PAEK derivatives may present a core-shell conformation with the polydopamine in the core as a result of a covalent polymerization and a supramolecular interaction regarding the interaction with the S-PAEK derivatives. Other structural shapes of the nanoparticles are as above mentioned.

Several particular aspects are that the stability of nanoparticles solution of polydopamine complexed with S-PAEK derivatives is higher than several days, for example at least three days, and said nanoparticles solution does modify the physico-chemistry of a substrate or a material to be coated, such as carbon fibers, in one step sizing.

These nanoparticles of PDA/S-PAEK may be advantageously used as a compatibilising agent of PDA in various high-performance matrices, such as hydrocarbon polymer matrices, carbon derivatives materials, such as carbon fibers, with the proviso that the effect of the invention is achieved. Non limitative examples of such a matrix may include thermoplastics, such as PAEK polymers, resins and PEI. In that case, the nanoparticles are embedded within the matrix. The compatibilisation may be explained by weak interactions, interdiffusion, $\pi$-stacking interactions or supramolecular interactions. The nanoparticles may also be used as a filler or a reinforcement agent in various matrices, such as described above, or as an adhesive agent at the interfacial layer of two or more parts of any shape to form a composite material, the composite material comprising for example at least one metallic or non-organic part, such as aluminum, steel or ceramic materials, or non-metallic or organic part, such as various polymers, glass based materials or ceramic materials. This composite material or multi-material assemblies may be made by spraying a solution of the nanoparticles of PDA/S-PAEK on at least a portion of a surface of the at least one part and let parts adhere together, for example, by pressure in an oven, if possible or required. The nanoparticles could also be used as an additive in an adhesive to promote adhesion of composite parts. They also may be used as constituent of sizing formulations for yarns or for fibers, such as carbon fibers, glass fibers, PET fibers and flax fibers. They also could be used in the medical field for example as a means incorporated in a proton exchange membrane or for implantable devices.

The nanoparticles advantageously improve (i) the compatibility, (ii) the adhesion and (iii) the hydrophilic properties of the material towards PDA owing to S-PAEK matrix, and (iv) the chemical reactivity or electrostatic interaction of material surfaces, for example carbon surface.

The invention also relates to a process for coating a material, comprising the following steps of:

a) providing an alkaline aqueous solution comprising a polyelectrolyte of the sulfonated-polyaryletherketone derivatives type;

b) adding dopamine in said alkaline aqueous solution of the polyelectrolyte with an oxidant to control the oxidative-induced polymerization or self-assembly of said dopamine in a nanometer scale; and

c) contacting said material with the alkaline aqueous solution of nanoparticles of polydopamine and of the polyelectrolyte of step b).

The step c) of contacting said material with the alkaline aqueous solution of step b), containing nanoparticles of polydopamine and of the polyelectrolyte, is preferably performed via immersion of said material or via deposition of droplet of said alkaline aqueous solution onto said material or via spraying said alkaline aqueous solution onto said material or via plasma coating of said alkaline aqueous solution onto said material, according to known technologies.

All preferred features of steps a) and b) are identical to those of the process for preparing nanoparticles of polydopamine and of a polyelectrolyte.

The implementation of the process allows the coating of a material, or a substrate, with the use for example of spraying device or a very short time dipping, such as advantageously of several minutes, better less than one minute, and especially less than 30 s, most advantageously less than 15 s.

The coated material with nanoparticles of the invention may in turn be incorporated in various high-performance matrices as above-described.

Advantageously, the step c) of contacting is performed at least 10 minutes after the step of dissolving the dopamine into said alkaline aqueous solution containing the polyelectrolyte. This polymerization duration provides a minimum level of nanoparticles that can generate a coating onto the material.

The process may further comprise, after the step c), a step d) of rinsing with water and/or drying said material, according to classical technologies, such as to obtain a coated material in a solid state.

The material is preferably a solid material, more preferably chosen among the group consisting of carbon fibers, glass fibers, PET fibers, flax fibers, silicon wafers, vitreous carbon, thermoplastic material, metallic parts and alloys.

Still another aspect is a material coated with nanoparticles made of polydopamine and sulfonated-polyaryletherketone (S-PAEK) derivatives, obtainable with the process of the invention.

The invention will be described more in details with the following figures.

Figure 1 represents $^1$H-NMR spectra of S-PEEK as a function of time of the sulfonation reaction.

Figure 2 represents hydrodynamic diameter of PDA particles obtained via oxidant-induced polymerization of dopamine (2 mg/mL) in the presence of THAM buffer as a function of THAM concentration. Measurements were performed by Dynamic Light Scattering (DLS).

Figure 3 represents hydrodynamic diameter of PDA particles obtained via oxidant-induced polymerization of dopamine (2 mg/mL) in the presence of THAM buffer and S-PEEK as a function of the S-PEEK concentration (0, 0.2 mg/mL, 2 mg/mL and 10 mg/mL) (Fig.3-II), and alternatively in the presence of polyethylene imine (PEtl) as a function of the PEtl concentration (comparative example) (Fig.3-I). Measurements were performed with Dynamic Light Scattering (DLS).

Figure 4A: scanning electron microscope (SEM) observations and WET-SEM experiments on unsized and coated carbon fibers with the SPEEK/PDA-buffer solution (obtained in THAM buffer of 50 mM, pH = 8.5, S-PEEK concentration of 2 mg/mL in $O_2$). Figure.4B: O/C, N/C and S/C atomic ratios determined at the fibers surface calculated using X-ray photoelectron spectroscopy (XPS) results.

Figure 5 represents scanning electron microscope (SEM) observations of coated carbon fibers respectively with PDA, with nanoparticles of PDA-PEtl and of PDA-S-PEEK.

## Materials and Methods

### 2.1. Materials

2.1.1. Poly(etheretherketone). One thermostable thermoplastic polymer was used in this study to synthesize a polyelectrolyte compatible with high-performance applications. An unreinforced and uncharged poly(etheretherketone) (PEEK) was supplied in the form of a fine powder (PEEK 150XF) by Victrex.

### 2.1.2. Carbon fiber.

The high performance GRANOC yarn pitch-based carbon fibers YSH-50A-60Z produced by Nippon Graphite Fiber Corporation. Based on the supplier datasheet, this is a high modulus and high strength 6 k tow count fibers (6000 monofilaments) with a tensile modulus of 630 GPa and a tensile strength of 3.9 GPa. The fiber is not sized (CF-Z) and used as-received.

### 2.1.3. Chemicals.

All chemicals were used as received. Tris(hydroxymethyl)aminomethane (THAM) (product n°: T4661, CAS: 77-86-1), dopamine hydrochloride (product n°: H8502, CAS: 62-31-7), were supplied by Sigma Aldrich. Hydrochloric acid 37% (product n°: X942, CAS: 7647-01-0) and sulphuric acid 95-98% (product n°: X944, CAS: 7664-98-9) were supplied by Carl Roth.

## 2.2. Methods

### 2.2.1. Synthesis of sulfonated-poly(etheretherketone) (S-PEEK).

The electrophilic aromatic sulfonation of the PEEK polymer was performed via the post-sulfonation method, according to the protocol used by Huang *et al.* [17]. The PEEK powder was dried in an oven at 120°C during 5 h as recommended by the supplier. 5 g of PEEK were dissolved in 95 mL of concentrated sulfuric acid ($H_2SO_4$, 95-97wt.%, ACS) into a three-necked round bottom flask and stirred at room temperature for 1h30. Then, the solution was heated at 70°C from 2.5 h to 24 h. The S-PEEK polymer was slowly precipitated in ice-cold ultrapure water (18.2 M$\Omega$.cm, 25°C). Then, the S-PEEK strands were washed thoroughly with ultrapure water until neutrality and dried at 80 °C overnight in a vacuum oven.

The monitoring of the sulfonation degree (SD) was performed using NMR.

$^1$H nuclear magnetic resonance (NMR) spectra were obtained using an Avance III HD 600 NMR spectrometer from Bruker operating at a $^1$H resonance frequency of 600 MHz and using a commercial double channel probe. Liquid NMR was performed with SPEEK samples dissolved in DMSO. For $^1$H-NMR 64k complex data points were acquired using a 30° pulse and a relaxation delay of 1 second. Spectra were processed using 0.3 Hz exponential multiplication and single zerofilling. The degree of sulfonation was determined using the following equation.

$$SD\ (\%) = \left(1 - \frac{A_{HF}}{A_{H_{AA'}}}\right) x\ 100$$

where $A_{HF}$ the area of signal of 4 protons if non sulfonated unit and $A_{AA'}$ the area of signal of 8 protons of the other units.

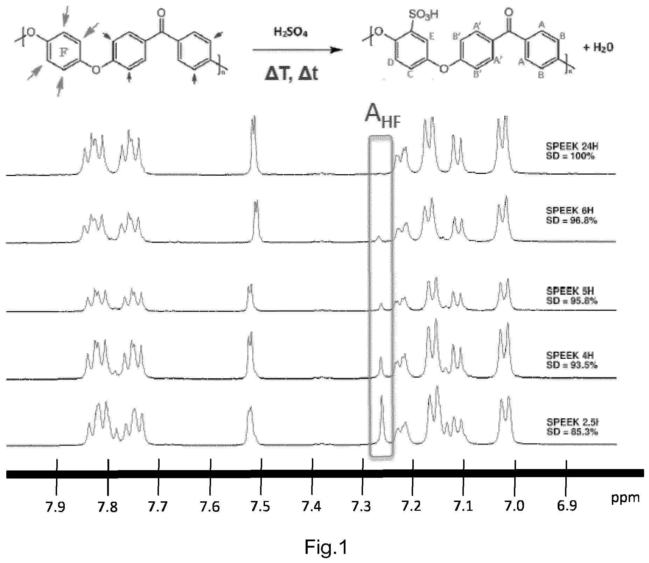

The subsequent SD to the electrophilic aromatic sulfonation achieves, as expected, a higher SD after about 5 hours with the methodology at 70°C. Thereafter, a kinetic study of the PEEK sulfonation was performed. Figure 1 shows NMR spectra of five SD measurement performed 2.5 h, 4 h, 5 h, 6 h and 24 h after the beginning of the reaction.

Overall, these data suggested efficient sulfonation of PEEK polymer to a polyelectrolyte with a solubility in water (85°C) beginning with a 0.96 SD and total with the complete sulfonation. Visual observation of the S-PEEK at different sulfonation reaction times were done (results not shown). It can be noticed, that S-PEEK appears in a different color depending on the SD. The more the SD is high the more the S-PEEK seems like crosslinked materials exhibiting a brown color [Merle, G et al. Friedel-Crafts Crosslinked Highly Sulfonated Polyether Ether Ketone (S-PEEK) Membranes for a Vanadium/Air Redox Flow Battery. Membranes 2014, 4(1), 1-19]. Moreover, it was observed that depending on the SD, the color varies from white-beige and opaque to brown and transparent. This irreversible chromism may be an indication of a conformation change via electrostatic interaction due to the sulfonic group attached to the aromatic ring instead of only $\pi$-$\pi$ interaction between the aromatic rings. It can be concluded that S-PEEK formation with an SD of 1 enables the preparation of polyelectrolyte solutions in water with a high-performance thermoplastic.

### 2.2.2 Synthesis of polydopamine in buffer

Surface treatments based on polydopamine can be prepared in alkaline aqueous solution by oxidant-induced polymerization. The polydopamine coatings are material-independent [Wei Q; et al. Oxidant-induced dopamine polymerization for multifunctional coatings. Polym. Chem. 2010, 1, 1430-1433.], and thin, surface-adherent polymer films have been deposited onto any kinds of substrates via pH-induced polymerization of dopamine and its derivates [8][Park J et al. Polydopamine-Based Simple and Versatile Surface Modification of Polymeric Nano Drug Carriers. ACS Nano, 2014, 8(4), 3347-3356.].

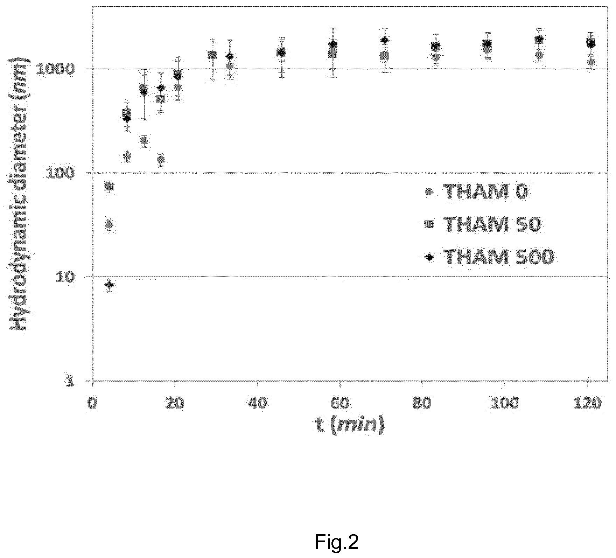

The polydopamine hydrodynamic diameter variation (Figure 2) as a function of oxidation duration of dopamine (concentration of 2 mg/mL) (from t=0 to 120 min) and THAM concentration (0.50 mg/mL and 500 mg/mL) have been measured via DLS and demonstrated that in alkaline aqueous solution, the particles growth are influenced by the pH (pH = 8.5, close to marine environment) and not by the concentration of the component of the buffer solutions. Error bars correspond to one standard deviation while at least 24 measurements were performed to increase statistics.

It can be seen from Figure 2 that after several minutes, the particles size is close to the micrometer to reach a plateau of about 1.2 to 1.8 $\mu$m. As an additional result, one can notice that a second particle population was identified (data not shown) with a hydrodynamic diameter of about 5 $\mu$m highlighting the possibility that micrometric polydopamine assembled into random aggregates. A dark solution with suspensions, small floating pieces, and sediments particles confirming the dopamine polymerization and aggregation is obtained. It could be assumed that these aggregates are typically multi-layered stacks of polydopamine self-assembled via supramolecular interaction such as $\pi$-$\pi$ stacking. This result may be interpreted as highlighting the difference between the dopamine polymerization *via* oxidation and the interparticulate interactions triggering the growth of polydopamine aggregates *via* supramolecular interaction. Thus, depending on the targeted application, a selective way has to be preferred concerning the polydopamine particles growth. It is well known that the self-assembled aggregates (non-covalent interaction), such as layer-by-layer polydopamine, become unstable and have very bad interlayer mechanical properties (or intrinsic mechanical properties) [Yang H. -C et al. Mussel-inspired modification of a polymer membrane for ultra-high water permeability and oil-in-water emulsion separation. J. Mater. Chem. A, 2014, 2, 10225-10230. - Jiang J.; et al. Antifouling and Antimicrobial Polymer Membranes Based on Bioinspired Polydopamine and Strong Hydrogen-Bonded Poly(N-vinyl pyrrolidone). ACS Appl. Mater. Interfaces, 2013, 5(24), 12895-12904.].

On the contrary, the deposition of dopamine coatings induced by a polymerization process is stable and drives inherently to strong adhesion with the substrate owing to the catechol structure. These hydrodynamic diameter variations and particles uncontrolled growth assure the prime of the importance of the solution aging when dedicated to surface treatment. Moreover, for high-performance applications, such as the interfacial layer improvement regarding adhesion promotion, the oxidant-induced polymerization process should be preferred to trigger strong interaction between dissimilar materials. In this way, it is imperative to control the growth of polydopamine and to stabilize the polydopamine aqueous solution to avoid the supramolecular interaction-lead aggregation of the polydopamine particles.

## 2.2.3. Synthesis of polydopamine in buffer/polyelectrolyte solutions.

Ultrapure water (18.2 MΩ.cm, 25°C) used in all experiments (except for fiber rinse cycles) was prepared in a three-stage Millipore Milli-Q purification system and was air-equilibrated before use. All glassware was submitted to cleaning steps using ethanol and acetone and rinsed with ultrapure water.

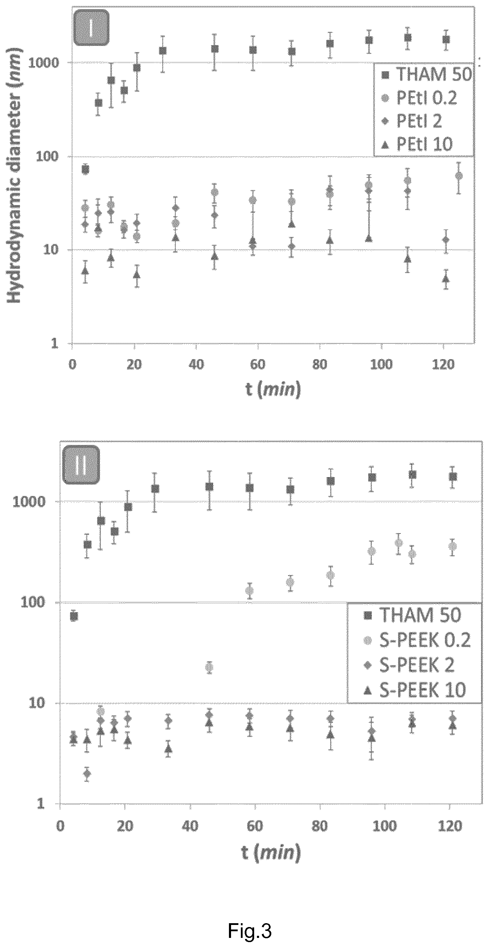

Dopamine hydrochloride was dissolved in a 50 mM THAM/HCl buffer solution (pH = 8.5) containing the polyelectrolyte in the presence of dissolved $O_2$ acting as an oxidant at a concentration of 2 mg/mL. Indeed, S-PEEK at 0, 0.2 mg/mL, 2 mg/mL and 10 mg/mL were dissolved in the THAM buffer solution before adding the dopamine hydrochloride. The time t=0 is defined by the dissolution of the dopamine hydrochloride in the buffer. The oxidation duration was between t=0 and 120 min. Error bars correspond to one standard deviation while at least 24 measurements were performed to increase statistics. Same procedure was applied with the use of PEtI as polyelectrolyte (comparative example). Fig.3-II shows that the oxidant-induced polymerization of dopamine with the presence of the S-PEEK polyelectrolyte generates nanoparticles of PDA/S-PEEK within the range of about 5 nm to about 10 nm, when S-PEEK concentration is respectively 2 mg/mL and 10 mg/mL, very shortly after the beginning of the polymerization, for example at t=5 min. It appears that the growth of these nanoparticles of PDA is constant within the duration time range of the oxidative-induced polymerization. With S-PEEK concentration of 0.2 mg/mL, the concentration ratio S-PEEK/Dopamine being equal to 0.1, it is observed a growth of nanoparticles from about 10 nm to 500 nm within the oxidative-induced polymerization duration of about 5 min to about 120 min. This latter example demonstrates that when the concentration ratio S-PEEK/Dopamine is too low, for example less than 0.25, the particle size of S-PEEK/PDA may not be controlled efficiently and may be too high that may provide nanoparticles less stable in an aqueous solution and make them less compatible with high-performance matrices.

It could be deduced that higher polyelectrolyte concentration generates smaller nanoparticle diameters, and that nanoparticles plateau values are attained very shortly after the beginning of the reaction.

With the use of PEtI as polyelectrolyte (Fig.3-I), the particle sizes of PDA are in the range of from about 6 nm to about 90 nm, the oxidation duration, typically of from about 5 min to 120 min, having not significant influence on the particles growth.

## 2.2.4. Carbon fiber surface treatment.

Carbon fibers were immersed in solutions containing the nanoparticles of PDA/S-PAEK (obtained in THAM buffer of 50 mM, pH = 8.5, S-PEEK concentration of 2 mg/mL in $O_2$) during 10 s, and rinsed with water before any further use and characterization.

A pressure-controlled Quanta FEG 200 environmental scanning electron microscope (SEM) from FEI Company Europe BV, was used in secondary electron detection mode to get information about the carbon fiber surface, the surface treatment deposition quality and the nano dopamine particles topography. The environmental mode, with gaseous secondary electron detector (GSED), enables wet samples to be observed through the use of partial vapour pressure in the microscope specimen chamber to analyze the drop growth and geometry at the surface of the treated fibers. All observations were directly performed on specimens without any particular preparation procedure (no conductive coating).

X-ray photoelectron spectroscopy (XPS) analyses of the carbon fibers were performed with a Hemispherical Energy Analyser SPECS (PHOIBOS 150) using a monochromatic source AlKα (1486.74 eV) as the incident radiation. Scans were collected from 0 to 1300 eV with a power of 200 W and an anode voltage of 12 kV. The pressure in the analysis chamber was about $5.10^{-8}$ Pa, and the pass energies were set to 80 eV and 20 eV for survey and higher resolution scans, respectively. The binding energy scale was referenced from the carbon contamination using the C (1s) PAEK signal at 284.6 eV. Core level PAEKs were analyzed using a nonlinear Shirley-type background. Concerning the analysis of the C (1s) high resolution spectra, the PAEK positions and areas were optimized by a weighted least-square fitting method using a GL function (product of a Lorentzian by a Gaussian) by fixing the full-width-at-half-maximum (FWHM) using XPSCASA software, except for the C-C sp$^2$ for which the spectrum was fitted allowing some variation of the FWHM. The analytic depth of the XPS method was estimated to be 10 nm.

The carbon fibers were coated using two hours aged buffer solution containing the S-PEEK/PDA partners.

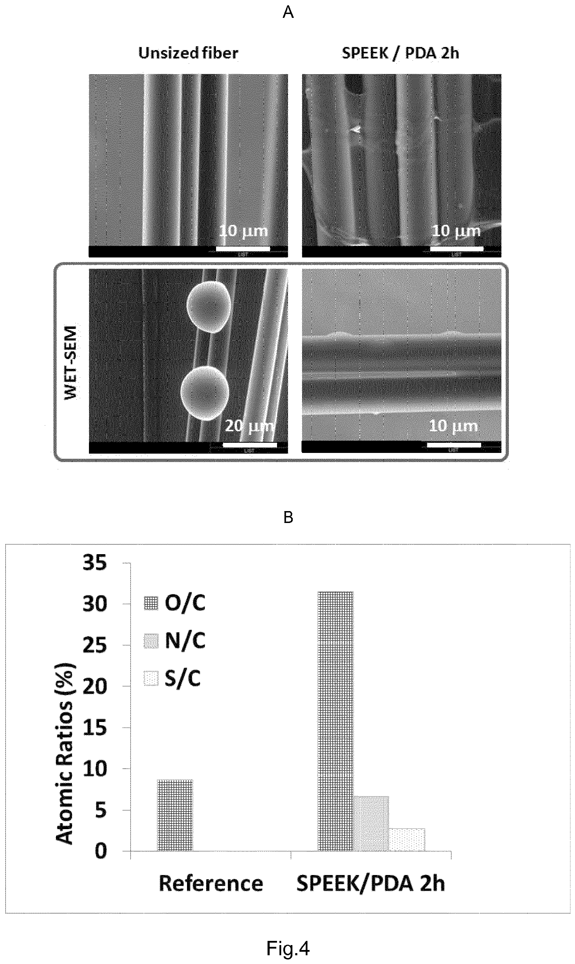

Fig. 4A, presents the SEM observations and WET-SEM experiments performed onto the unsized reference fibers and fibers treated with the abovementioned solution (referenced "SPEEK/PDA 2h"). Regarding the SEM observations, one can notice the presence of a thin film onto the fiber treated with the S-PEEK/PDA partners. This result highlights the film-making property of the S-PEEK. Moreover, the surface coating seems to be quite homogeneous and creating a bridge between the monofilaments. Regarding the WET-SEM experiments, the drops growing onto the reference and unsized fiber have olive shape with a very weak contact area between the fiber and the drop. Regarding the treated fiber, they seem to be covered with no possibility to make growth drop onto the surface. This result highlights the modification of the chemical properties of the extreme surface after surface treatment.

The XPS results (Fig. 4B) confirm the observations with an improvement of the O/C ratio and the identification of N and S atoms onto the fiber. These results demonstrated the possibility to treat carbon fiber with such formulation paving the way to the formulation of sizing for composite materials dedicated to high-performance applications.

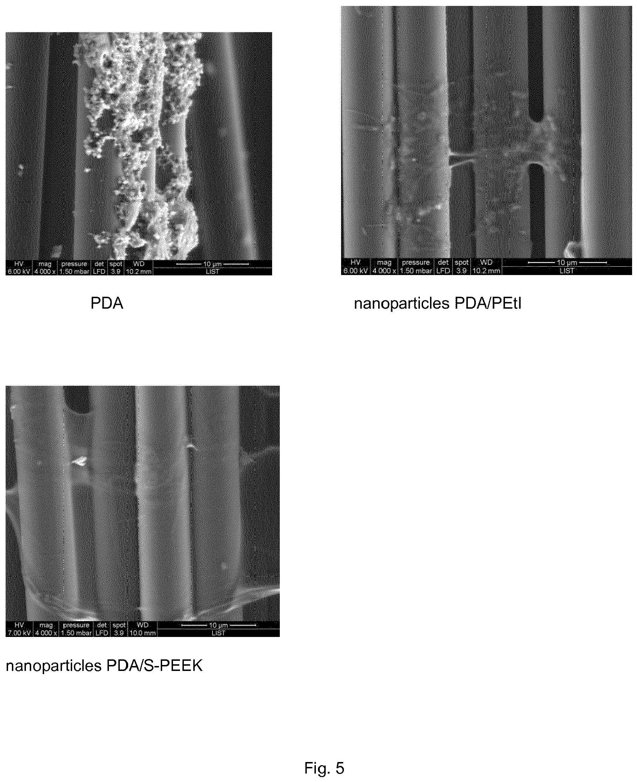

Fig.5 shows SEM observations of carbon fibers with the PDA coating without the presence polyelectrolyte, and it was confirmed the very few sensitive fiber surface. Indeed, the free-PDA seems to interact preferentially with the PDA coating resulting in a heterogeneous covering with a surface covering made of multi-layered of PDA well known for its very poor interlayer mechanical properties.

On the contrary, with the nanoparticles PDA/PEtI partners, it is observed surface covering made of polymer coating with trapped adhesive promoters (Fig.5).

Again, one can observe the very suitable film-making property of the PDA/S-PEEK partner making the solution of said nanoparticles an interesting partner for the development of high-performance sizing (Fig. 5).

REFERENCES

[1] M. Reyne. Solutions composites : Thermodurcissables et thermoplastiques. JEC, Paris, 2006.

[2] Y. Zhao, H.M. Wong, S.C. Lui, E.Y.W. Chong, G. Wu, et al. Plasma Surface Functionalized Polyetheretherketone for Enhanced Osseo-Integration at Bone-Implant Interface. ACS Appl Mater Interfaces, 8:3901-3911, 2016.

[3] A. Martin, B. Defoort, C. Kowandy, X. Coqueret. Interfacial layer in high-performance CFRP composites cured-out-of-autoclave: Influence of the carbon fiber surface and its graphite-like properties. Composites Part A, 110:203-216, 2018.

[4] J. Schultz, M. Nardin. Some physico-chemicals aspects of the fiber-matrix interphase in composites materials. The Journal of Adhesion; 45:59-71, 1994.

[5] L.T. Drzal. Composite interphase characterization. SAMPE Journal, 19:7-13, 1983.

[6] I. Giraud, S. Franceschi-Messant, E. Perez, C. Lacabanne, E. Dantras. Preparation of aqueous dispersion of thermoplastic sizing agent for carbon fiber by emulsion/solvent evaporation. Appl Surf Sci, 266:94-99, 2013.

[7] A. Martin, F. Addiego, G. Mertz, D. Ruch, P. Dubois. Pitch-based carbon fibre-reinforced PEEK composites: optimization of interphase properties by water-based treatments and self-assembly. J Material Sci Eng, 6:1, 2016.

[8] H. Lee, S.M. Dellatore, W.M. Miller, P.B. Messersmith. Mussel-Inspired Surface Chemistry for Multifunctional Coatings. Science, 318:426-430, 2007.

[9] C.E. Brubaker, P.B. Messersmith. The Present and Future of Biologically Inspired Adhesive Interfaces and Materials. Langmuir, 28:2200-2205,2012.

[10] H. Long, D, Del Frari. A. Martin, J. Didierjean, V. Ball, M. Michel. H. Ibn El Ahrach. Polydopamine as a promising candidate for the design of high performance and corrosion tolerant polymer electrolyte fuel cell electrodes. J. Power Sources, 307:569-577,2016.

[11] A. Scheider, J. Hemmerlé, M. Allais, J. Didierjean, M Michel, M. d'Ischia, V. Ball. Boric Acid as an Efficient Agent for the Control of Polydopamine Self-Assembly and Surface Properties. ACS Appl. Mater. Interfaces, 10:7574-7580, 2018.

[12] P. Lavalle, J.C. Voegel, D. Vautier, B. Senger, P. Schaaf, et al. Dynamic aspects of films prepared by a sequential deposition of species: perspectives for smart and responsive materials. Adv Mater 23:1191-1221, 2011.

[13] M. Schönhoff , V. Ball, A. Bausch, C. Déjugnat, N. Delorme, et al. Hydration and internal properties of polyelectrolyte multilayers. Colloids Surf A Physicochem Eng, 303:14-29, 2007.

[14] S.A. Sukhishvili, S. Granick. Layered, Erasable, Ultrathin Polymer Films. J Amer Chem Soc, 122:9550-9551, 2000.

[15] T. Serizawa, K. Hamada, T. Kitayama, N. Fujimoto, K. Hatada, et al. Stepwise Stereocomplex Assembly of Stereoregular Poly(methyl methacrylate)s on a Substrate. J Amer Chem Soc, 122:1891-1899, 2000.

[16] H. Jiang, X. Zhao, A.H. Shelton, S.H. Lee, J.R. Reynolds, et al. Variable-Band-Gap Poly(arylene ethynylene) Conjugated Polyelectrolytes Adsorbed on Nanocrystalline TiO2: Photocurrent Efficiency as a Function of the Band Gap. ACS Appl Mater Interfaces, 1:381-387, 2009.

[17] R.Y.M. Huang, P. Shao, C.M. Burns, X. Feng. Sulfonation of poly(etherether ketone)(PEEK): Kinetic study and characterization, J. Appl. Polym. Sci., 82:2651-2660, 2001.

**Claims**

1.  A process for preparing nanoparticles of polydopamine and of a polyelectrolyte, comprising the following steps of:

    a) providing an alkaline aqueous solution comprising a polyelectrolyte of the sulfonated-polyaryletherketone derivatives type (S-PAEK); and
    b) adding dopamine in said alkaline aqueous solution of the polyelectrolyte with an oxidant, wherein the concentration ratio S-PAEK/dopamine is within the range of 0.25 to 5, to induce and to control the oxidative-induced polymerization or self-assembly of said dopamine in a nanometer scale, for obtaining nanoparticles of polydopamine and of said polyelectrolyte.

2.  The process according to claim 1, wherein the sulfonation degree (SD) of S-PAEK derivatives is comprised between 0.95 and 1.

3.  The process according to claim 1 or 2, wherein S-PAEK derivatives include at least one compound among the S-PEK (sulfonated-polyetherketone), S-PEEK (sulfonated-polyetheretherketone), S-PEEKK (sulfonated-polyetheretherketoneketone), S-PEKK (sulfonated-polyetherketoneketone) and S-PEKEKK (sulfonated-polyetherketoneetherketoneketone) compounds.

4.  The process according to any one of claims 1 to 3, wherein the concentration of the S-PAEK derivatives polyelectrolyte is from 0.2 mg/mL to 10 mg/mL, preferably from 0.5 mg/mL to 10 mg/mL, more preferably from 1 mg/mL to 10 mg/mL, most preferably from 2 mg/mL to 10 mg/mL.

5.  The process according to any one of claims 1 to 4, wherein the dopamine is dissolved in the aqueous alkaline solution of the S-PAEK derivatives polyelectrolyte to obtain a concentration of from 0.2 mg/mL to 50 mg/mL, preferably of from 0.2 mg/mL to 20 mg/mL, more preferably of from 0.2 mg/mL to 10 mg/mL.

6.  The process according to claim 4 or 5, wherein the concentration ratio S-PAEK/dopamine is advantageously from 0.5 to 5, even better from 1 to 5.

7.  The process according to any one of claims 1 to 6, wherein the oxidant is air, oxygen or copper sulfate.

8.  The process according to any one of claims 1 to 7, wherein the pH of the aqueous alkaline solution is in the range of 7.5 to 10.

9.  The process according to any one of claims 1 to 8, wherein the oxidative-induced polymerization duration is of from about 5 min to 120 min, more preferably from about 5 min to 40 min, especially from about 5 min to 20 min, particularly from about 5 min to 10 min.

10. Nanoparticles of polydopamine and of S-PAEK derivatives presenting particle sizes of from 5 nm to 10 nm, obtainable by the process according to any of claims 1 to 9.

11. Nanoparticles according to claim 10, said nanoparticles being included in an alkaline aqueous solution, the pH being preferably of from 7.5 to 10.

12. A material coated with nanoparticles made of polydopamine and sulfonated-polyaryletherketone (S-PAEK) derivatives, according to claim 10 or 11 or as obtainable by the process according to any one of claims 1 to 9.

13. A process for coating a material, comprising the following steps of:

    a) providing an alkaline aqueous solution comprising a polyelectrolyte of the sulfonated-polyaryletherketone derivatives type;
    b) adding dopamine in said alkaline aqueous solution of the polyelectrolyte with an oxidant to control the oxidative-induced polymerization or self-assembly of said dopamine in a nanometer scale; and
    c) contacting said material with the alkaline aqueous solution solution of nanoparticles of polydopamine and of the polyelectrolyte of step b).

14. The process according to claim 13, wherein the material is a solid material, chosen among the group consisting of carbon fibers, glass fibers, PET fibers, flax fibers, silicon wafers, vitreous carbon, thermoplastic material, metallic parts and alloys.

15. A use of nanoparticles of polydopamine (PDA) and of sulfonated-polyaryletherketone (S-PAEK) derivatives according to claim 10 or 11, as compatibilising agent of PDA in high-performance matrices such as hydrocarbon polymer matrices or carbon derivatives materials, or as a filler or a reinforcement agent in said matrices, or as an adhesive agent at the interface of two or more parts of any shape to form a composite material, the composite material comprising at least one metallic or inorganic part and/or non-metallic or organic part, or as an additive in an adhesive to promote adhesion of composite parts, or as a constituent of sizing formulations for yarns or for fibers, such as carbon fibers, glass fibers, PET fibers and flax fibers, or in the medical field.

**Patentansprüche**

1. Ein Verfahren zur Herstellung von Nanopartikeln aus Polydopamin und einem Polyelektrolyten, das die folgenden Schritte umfasst:

   a) Bereitstellen einer alkalischen wässrigen Lösung, die einen Polyelektrolyten des Typs sulfonierte Polyaryletherketon-Derivate (S-PAEK) umfasst; und
   b) Zugeben von Dopamin in die alkalische wässrige Lösung des Polyelektrolyten mit einem Oxidationsmittel, wobei das Konzentrationsverhältnis S-PAEK/Dopamin im Bereich von 0. 25 bis 5 liegt, um die oxidativ induzierte Polymerisation oder Selbstanordnung des Dopamins im Nanometerbereich zu bewirken und zu kontrollieren, um Nanopartikel aus Polydopamin und dem Polyelektrolyten zu erhalten.

2. Das Verfahren nach Anspruch 1, wobei der Sulfonierungsgrad (SD) der S- PAEK-Derivate zwischen 0,95 und 1 liegt.

3. Das Verfahren nach Anspruch 1 oder 2, wobei S-PAEK-Derivate mindestens eine Verbindung unter den S-PEK (sulfoniertes Polyetherketon), S-PEEK (sulfoniertes Polyetheretherketon), S-PEEKK (sulfoniertes Polyetheretherketon), S-PEKK (sulfoniertes Polyetherketon) und S-PEKEKK (sulfoniertes Polyetherketonetherketon) Verbindungen umfassen.

4. Das Verfahren nach einem der Ansprüche 1 bis 3, wobei die Konzentration des S-PAEK-Derivats Polyelektrolyt von 0,2 mg/mL bis 10 mg/mL, vorzugsweise von 0,5 mg/mL bis 10 mg/mL, noch bevorzugter von 1 mg/mL bis 10 mg/mL, am meisten bevorzugt von 2 mg/mL bis 10 mg/mL beträgt.

5. Das Verfahren nach einem der Ansprüche 1 bis 4, wobei das Dopamin in der wässrigen alkalischen Lösung des Polyelektrolytenderivats S-PAEK gelöst wird, um eine Konzentration von 0,2 mg/ml bis 50 mg/ml, vorzugsweise von 0,2 mg/ml bis 20 mg/ml, noch bevorzugter von 0,2 mg/ml bis 10 mg/ml zu erhalten.

6. Das Verfahren nach Anspruch 4 oder 5, wobei das Konzentrationsverhältnis S-PAEK/Dopamin vorzugsweise 0,5 bis 5, noch bevorzugter 1 bis 5 beträgt.

7. Das Verfahren nach einem der Ansprüche 1 bis 6, wobei das Oxidationsmittel Luft, Sauerstoff oder Kupfersulfat ist.

8. Das Verfahren nach einem der Ansprüche 1 bis 7, wobei der pH-Wert der wässrigen alkalischen Lösung im Bereich von 7,5 bis 10 liegt.

9. Das Verfahren nach einem der Ansprüche 1 bis 8, wobei die oxidativ induzierte Polymerisationsdauer etwa 5 Min bis 120 Min, vorzugsweise etwa 5 Min bis 40 Min, besonders bevorzugt etwa 5 Min bis 20 Min, insbesondere etwa 5 Min bis 10 Min beträgt.

10. Nanopartikel aus Polydopamin und aus S-PAEK-Derivaten mit Teilchengrößen von 5 nm bis 10 nm, erhältlich durch das Verfahren nach einem der Ansprüche 1 bis 9.

11. Nanopartikel nach Anspruch 10, wobei die Nanopartikel in einer alkalischen wässrigen Lösung enthalten sind, wobei der pH-Wert vorzugsweise 7,5 bis 10 beträgt.

12. Ein mit Nanopartikeln beschichtetes Material aus Polydopamin- und sulfonierten Polyaryletherketon (S-PAEK)-Derivaten nach Anspruch 10 oder 11 oder erhältlich durch das Verfahren nach einem der Ansprüche 1 bis 9.

13. Ein Verfahren zur Beschichtung eines Materials, das die folgenden Schritte umfasst:

    a) Bereitstellen einer alkalischen wässrigen Lösung, die einen Polyelektrolyten des Typs sulfonierte Polyaryletherketon-Derivate umfasst;
    b) Zugabe von Dopamin in die alkalische wässrige Lösung des Polyelektrolyten mit einem Oxidationsmittel, um die oxidativ induzierte Polymerisation oder Selbstanordnung des Dopamins im Nanometer-Maßstab zu steuern; und
    c) Zusammenbringen des Materials mit der alkalischen wässrigen Lösung von Nanopartikeln aus Polydopamin und dem Polyelektrolyten aus Schritt b).

14. Das Verfahren nach Anspruch 13, wobei das Material ein festes Material ist, ausgewählt aus der Gruppe bestehend aus Kohlenstofffasern, Glasfasern, PET-Fasern, Flachsfasern, Siliziumscheiben, glasartigem Kohlenstoff, thermoplastischem Material, Metallteilen und Legierungen.

15. Eine Verwendung von Nanopartikeln von Polydopamin (PDA) und von sulfonierten Polyaryletherketon (S-PAEK)-Derivaten nach Anspruch 10 oder 11 als Kompatibilisierungsmittel von PDA in Hochleistungsmatrizen, wie z.B. Kohlenwasserstoffpolymermatrizen oder Kohlenstoffderivatmaterialien, oder als Füllstoff oder Verstärkungsmittel in den genannten Matrizen oder als Klebemittel an der Grenzfläche von zwei oder mehr Teilen beliebiger Form zur Bildung eines Verbundmaterials, wobei das Verbundmaterial mindestens einen metallischen oder anorganischen Teil und/oder einen nichtmetallischen oder organischen Teil umfasst, oder als Zusatz in einem Klebstoff, um die Haftung von Verbundteilen zu fördern, oder als Bestandteil von Schlichteformulierungen für Garne oder für Fasern, wie Kohlenstofffasern, Glasfasern, PET-Fasern und Flachsfasern, oder im medizinischen Bereich.

## Revendications

1. Un procédé de préparation de nanoparticules de polydopamine et d'un polyélectrolyte, comprenant les étapes suivantes consistant à :

   a) fournir une solution aqueuse alcaline comprenant un polyélectrolyte du type des dérivés du polyaryléthercétone sulfoné (S-PAEK) ; et
   b) ajouter de la dopamine dans ladite solution aqueuse alcaline du polyélectrolyte avec un oxydant, le rapport de concentration S-PAEK/dopamine étant compris entre 0,25 et 5, afin d'induire et de contrôler la polymérisation induite par l'oxydation ou l'auto-assemblage de ladite dopamine à l'échelle nanométrique, pour obtenir des nanoparticules de polydopamine et dudit polyélectrolyte.

2. Le procédé selon la revendication 1, dans lequel le degré de sulfonation, (-SD) des dérivés de S-PAEK est compris entre 0,95 et 1.

3. Le procédé selon la revendication 1 ou 2, dans lequel les dérivés de S-PAEK comprennent au moins un composé parmi les composés de S-PEK (polyéthercétone sulfoné), S-PEEK (polyétheréthercétone sulfoné), S-PEEKK (polyétheréthercétonecétone sulfoné), S-PEKK (polyéthercétonecétone sulfoné) et S-PEKEKK (polyéthercétoneéthercétonecétone sulfoné).

4. Le procédé selon l'une des revendications 1 à 3, dans lequel la concentration du polyélectrolyte des dérivés du S-PAEK est comprise entre 0,2 mg/mL et 10 mg/mL, de préférence entre 0,5 mg/mL et 10 mg/mL, plus préférablement entre 1 mg/mL et 10 mg/mL, et plus préférablement encore entre 2 mg/mL et 10 mg/mL.

5. Le procédé selon l'une quelconque des revendications 1 à 4, dans lequel la dopamine est dissoute dans la solution aqueuse alcaline du polyélectrolyte des dérivés du S-PAEK pour obtenir une concentration comprise entre 0,2 mg/mL et 50 mg/mL, de préférence entre 0,2 mg/mL et 20 mg/mL, plus préférablement entre 0,2 mg/mL et 10 mg/mL.

6. Le procédé selon la revendication 4 ou 5, dans lequel le rapport de concentration S-PAEK/dopamine est avantageusement de 0,5 à 5, mieux encore de 1 à 5.

7. Le procédé selon l'une des revendications 1 à 6, dans lequel l'oxydant est l'air, l'oxygène ou le sulfate de cuivre.

8. Le procédé selon l'une des revendications 1 à 7, dans lequel le pH de la solution aqueuse alcaline est compris entre 7,5 et 10.

9. Le procédé selon l'une quelconque des revendications 1 à 8, dans lequel la durée de polymérisation induite par oxydation est d'environ 5 min à 120 min, plus préférablement d'environ 5 min à 40 min, notamment d'environ 5 min à 20 min, en particulier d'environ 5 min à 10 min.

10. Nanoparticules de polydopamine et de dérivés du S-PAEK présentant des tailles de particules allant de 5 nm à 10 nm, pouvant être obtenues par le procédé selon l'une quelconque des revendications 1 à 9.

11. Nanoparticules selon la revendication 10, lesdites nanoparticules étant incluses dans une solution aqueuse alcaline, le pH étant de préférence compris entre 7,5 et 10.

12. Un matériau revêtu de nanoparticules constituées de dérivés de polydopamine et de polyaryléthercétone sulfoné (S-PAEK), selon la revendication 10 ou 11 ou tel qu'obtenu par le procédé selon l'une quelconque des revendications 1 à 9.

13. Un procédé de revêtement d'un matériau, comprenant les étapes suivantes consistant à :

   a) fournir une solution aqueuse alcaline comprenant un polyélectrolyte du type des dérivés du polyaryléthercétone sulfoné ;
   b) ajouter de la dopamine dans ladite solution aqueuse alcaline du polyélectrolyte avec un oxydant pour contrôler la polymérisation induite par l'oxydation ou l'auto-assemblage de ladite dopamine à l'échelle nanométrique ; et
   c) mettre en contact ledit matériau avec la solution aqueuse alcaline de nanoparticules de polydopamine et de polyélectrolyte de l'étape b).

14. Le procédé selon la revendication 13, dans lequel le matériau est un matériau solide, choisi parmi le groupe constitué de fibres de carbone, fibres de verre, fibres de PET, fibres de lin, plaquettes de silicium, carbone vitreux, matériaux thermoplastiques, pièces métalliques et alliages.

15. Une utilisation des nanoparticules de polydopamine (PDA) et des dérivés du polyaryléthercétone sulfoné (S-PAEK) selon la revendication 10 ou 11, en tant qu'agent compatibilisant de PDA dans des matrices de haute performance telles que des matrices de polymères hydrocarbonés ou des matériaux dérivés du carbone, ou en tant que charge ou agent de renforcement dans lesdites matrices, ou en tant qu'agent adhésif à l'interface de deux ou plusieurs pièces de forme quelconque pour former un matériau composite, le matériau composite comprenant au moins une partie métallique ou inorganique et/ou une partie non métallique ou organique, ou en tant qu'additif dans un adhésif pour favoriser l'adhésion de pièces composites, ou en tant que constituant de formulations d'ensimage pour fils ou pour fibres, telles que les fibres de carbone, les fibres de verre, les fibres PET et les fibres de lin, ou dans le domaine médical.

Fig.1

Fig.2

Fig.3

A

B

Fig.4

PDA

nanoparticles PDA/PEtI

nanoparticles PDA/S-PEEK

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105529485 A
- CN 104069752 A1
- CN 103554831 A1
- CN 106188590 A

- CN 105390721
- CN 103715438 A
- WO 2013103322 A1

**Non-patent literature cited in the description**

- *CHEMICAL ABSTRACTS,* 77-86-1
- *CHEMICAL ABSTRACTS,* 62-31-7
- *CHEMICAL ABSTRACTS,* 7647-01-0
- *CHEMICAL ABSTRACTS,* 7664-98-9
- **MERLE, G et al.** Friedel-Crafts Crosslinked Highly Sulfonated Polyether Ether Ketone (S-PEEK) Membranes for a Vanadium/Air Redox Flow Battery. *Membranes,* 2014, vol. 4 (1), 1-19
- **WEI Q; et al.** Oxidant-induced dopamine polymerization for multifunctional coatings. *Polym. Chem,* 2010, vol. 1, 1430-1433
- **PARK J et al.** Polydopamine-Based Simple and Versatile Surface Modification of Polymeric Nano Drug Carriers. *ACS Nano,* 2014, vol. 8 (4), 3347-3356
- **YANG H. -C et al.** Mussel-inspired modification of a polymer membrane for ultra-high water permeability and oil-in-water emulsion separation. *J. Mater. Chem. A,* 2014, vol. 2, 10225-10230
- **JIANG J et al.** Antifouling and Antimicrobial Polymer Membranes Based on Bioinspired Polydopamine and Strong Hydrogen-Bonded Poly(N-vinyl pyrrolidone). *ACS Appl. Mater. Interfaces,* 2013, vol. 5 (24), 12895-12904
- **M. REYNE.** Solutions composites : Thermodurcissables et thermoplastiques. *JEC,* 2006
- **Y. ZHAO ; H.M. WONG ; S.C. LUI ; E.Y.W. CHONG ; G. WU et al.** Plasma Surface Functionalized Polyetheretherketone for Enhanced Osseo-Integration at Bone-Implant Interface. *ACS Appl Mater Interfaces,* 2016, vol. 8, 3901-3911
- **A. MARTIN ; B. DEFOORT ; C. KOWANDY ; X. COQUERET.** Interfacial layer in high-performance CFRP composites cured-out-of-autoclave: Influence of the carbon fiber surface and its graphite-like properties. *Composites Part A,* 2018, vol. 110, 203-216
- **J. SCHULTZ ; M. NARDIN.** Some physico-chemicals aspects of the fiber-matrix interphase in composites materials. *The Journal of Adhesion,* 1994, vol. 45, 59-71

- **L.T. DRZAL.** Composite interphase characterization. *SAMPE Journal,* 1983, vol. 19, 7-13
- **I. GIRAUD ; S. FRANCESCHI-MESSANT ; E. PEREZ ; C. LACABANNE ; E. DANTRAS.** Preparation of aqueous dispersion of thermoplastic sizing agent for carbon fiber by emulsion/solvent evaporation. *Appl Surf Sci,* 2013, vol. 266, 94-99
- **A. MARTIN ; F. ADDIEGO ; G. MERTZ ; D. RUCH ; P. DUBOIS.** Pitch-based carbon fibre-reinforced PEEK composites: optimization of interphase properties by water-based treatments and self-assembly. *J Material Sci Eng,* 2016, vol. 6 (1
- **H. LEE ; S.M. DELLATORE ; W.M. MILLER ; P.B. MESSERSMITH.** Mussel-Inspired Surface Chemistry for Multifunctional Coatings. *Science,* 2007, vol. 318, 426-430
- **C.E. BRUBAKER ; P.B. MESSERSMITH.** The Present and Future of Biologically Inspired Adhesive Interfaces and Materials. *Langmuir,* 2012, vol. 28, 2200-2205
- **H. LONG, D ; DEL FRARI. A. MARTIN ; J. DIDIERJEAN ; V. BALL ; M. MICHEL. H. IBN EL AHRACH.** Polydopamine as a promising candidate for the design of high performance and corrosion tolerant polymer electrolyte fuel cell electrodes. *J. Power Sources,* 2016, vol. 307, 569-577
- **A. SCHEIDER ; J. HEMMERLÉ ; M. ALLAIS ; J. DIDIERJEAN ; M MICHEL ; M. D'ISCHIA ; V. BALL.** Boric Acid as an Efficient Agent for the Control of Polydopamine Self-Assembly and Surface Properties. *ACS Appl. Mater. Interfaces,* 2018, vol. 10, 7574-7580
- **P. LAVALLE ; J.C. VOEGEL ; D. VAUTIER ; B. SENGER ; P. SCHAAF et al.** Dynamic aspects of films prepared by a sequential deposition of species: perspectives for smart and responsive materials. *Adv Mater,* 2011, vol. 23, 1191-1221

- **M. SCHÖNHOFF ; V. BALL ; A. BAUSCH ; C. DÉJUGNAT ; N. DELORME et al.** Hydration and internal properties of polyelectrolyte multilayers. *Colloids Surf A Physicochem Eng,* 2007, vol. 303, 14-29
- **S.A. SUKHISHVILI ; S. GRANICK.** Layered, Erasable, Ultrathin Polymer Films. *J Amer Chem Soc,* 2000, vol. 122, 9550-9551
- **T. SERIZAWA ; K. HAMADA ; T. KITAYAMA ; N. FUJIMOTO ; K. HATADA et al.** Stepwise Stereocomplex Assembly of Stereoregular Poly(methyl methacrylate)s on a Substrate. *J Amer Chem Soc,* 2000, vol. 122, 1891-1899
- **H. JIANG ; X. ZHAO ; A.H. SHELTON ; S.H. LEE ; J.R. REYNOLDS et al.** Variable-Band-Gap Poly(arylene ethynylene) Conjugated Polyelectrolytes Adsorbed on Nanocrystalline TiO2: Photocurrent Efficiency as a Function of the Band Gap. *ACS Appl Mater Interfaces,* 2009, vol. 1, 381-387
- **R.Y.M. HUANG ; P. SHAO ; C.M. BURNS ; X. FENG.** Sulfonation of poly(etherether ketone)(PEEK): Kinetic study and characterization. *J. Appl. Polym. Sci.,* 2001, vol. 82, 2651-2660